# EUROPEAN PATENT SPECIFICATION

(11) **EP 1 903 799 B1**
(45) Date of publication and mention of the grant of the patent: **20.04.2011**
(21) Application number: 06791142.0
(22) Date of filing: 28.09.2006
(51) Int. Cl.: H04N 7/16

(54) **A METHOD FOR REALIZING PREVIEW OF IPTV PROGRAMS, AN ENCRYPTION APPARATUS, A RIGHT CENTER SYSTEM AND A USER TERMINAL**
VERFAHREN ZUR REALIZIERUNG EINER VORSCHAU VON IPTV PROGRAMME, UND VERSCHLÜSSELUNGSANORDNUNG, ERMÄCHTIGUNGSCENTERSYSTEM UND BENUTZERSTATION
PROCEDE DE REALISATION D'UNE PREVISUALISATION DE PROGRAMMES IPTV, APPAREIL DE CRYPTAGE, SYSTEME CENTRAL DE DROITS ET TERMINAL UTILISATEUR

(30) Priority: 28.09.2005 CN 200510105477
(43) Date of publication of application: 26.03.2008
(73) Proprietor: Huawei Technologies Co., Ltd., Shenzhen, Guangdong Province 518129 (CN)
(72) Inventor: SUN, Chao, Guangdong Province (CN)
(74) Representative: Epping - Hermann - Fischer
(86) International application number: PCT/CN2006/002555
(87) International publication number: WO 2007/036155

(56) References cited:
- EP-A- 0 898 425
- WO-A1-97/24832
- CN-A- 1 209 016
- CN-A- 1 645 934
- US-A- 5 615 265
- US-A1- 2002 170 053
- WIM MOOIJ: "Advances in conditional access technology" BROADCASTING CONVENTION, 1997. IBS 97., INTERNATIONAL (CONF. PUBL. 447 ) AMSTERDAM, NETHERLANDS 12-16 SEPT. 1997, LONDON, UK,IEE, UK, 12 September 1997 (1997-09-12), pages 461-464, XP006508799 ISBN: 978-0-85296-694-5

## Description

### Field of the Invention

The present invention relates to the field of network communication technology, and particularly to a method for implementing preview of IPTV programs, an encryption apparatus, a right center system and a user terminal.

### Background of the Invention

In today's IPTV service provision process, usually the program preview function is implemented through the Media Distribute Network (MDN). The method is implemented as follows: Program fragments are extracted to compose new programs, and the programs are previewed on the subscriber's request.

However, the above technical scheme has the following drawbacks: since the program fragments can only be abstracted to compose new preview programs through MDN on the premise that the programs are not encrypted, this method can't be used to implement preview of encrypted programs; furthermore, if the previewed programs are not encrypted, it is difficult to ensure security of the programs; and if the preview programs are to be encrypted, the extracted program fragments have to be encrypted again by an encryption unit, which results in complex processing.

As more and more stream media are transmitted over the network, a new technique which is called Digital Right Management (DRM) is developed. By using the DRM, not only the digital contents are protected, but also program preview and batch ordering services can be deployed.

Therefore, with emerging of the DRM technique, a method for implementing preview of IPTV programs occurs. The method is implemented by means of providing preview authorization to a user terminal on the basis of a DRM system.

Specifically, the method is implemented as follows: A first level encryption is executed for the program to be previewed, and the Content Encrypt Key (CEK) of the program is carried in the preview right, which also carries information of the accumulated time of previews which is permitted, number of previews, and validity period, etc. After a user terminal initiated a preview request and registered with the right center, the right center dispatches the right of corresponding program to be previewed to the terminal. The terminal obtains a CEK of the program through the right information, decrypts the program content, and plays the program for the user to preview. When the playing time of the program approaches the accumulated time of preview specified in the preview right, the preview right will become invalid, and the program preview is refused.

Though the above technical scheme can implement preview of encrypted programs and cut the secondary encryption process, it is obvious that the technical scheme has the following drawbacks:

1. It severely increases the concurrent traffic of visits to the right center and degrades the system reliability. The preview function is usually free of charge to users, and users are accustomed to choose a program to be watched with certain charge by previewing among a vast amount of programs. However, for each preview operation, a preview right is required to be dispatched from the right center; as a result, when a large number of users choose programs, they put a high requirement on processing capacity of the right center.

2. Since a preview right application process is required whenever a program is to be previewed, the subscriber has to wait for a long time which leads to a poor experience.

European patent application EP-A-0 898425 discloses a method for transmitting a plurality of programs having restricted access to an end-user and a method for decoding an encrypted program associated with a package of programs. For example, a group (package) comprising at least one program is provided, and keys for each program are also provided. The program keys are themselves encoded by a package key. And the package is then transmitted to a terminal and subsequently decoded using the package key.

Document US-A-5 615 265 discusses about a process for the transmission and reception of conditional access programs controlled by the same operator, in which specific check words (MCSi) are formed for various programs of the same operator from a root check word individual to the operator.

US patent application US 2002/170053A1 discloses various methods for distributing cryptographic keys in a network comprising a server and a client.

A document of WIM MOOIJ entitled "Advances in conditional access technology" (1997-09-12) introduces the general principles of Conditional Access technology in Pay-TV applications, and discusses the evolution of such technology from analogue TV to digital TV.

### Summary of the Invention

In view of the drawbacks in the prior art, an embodiment of the invention provides a method for implementing preview of programs, which implements pre-authorization for batch programs, reduces concurrent traffic of visits to the right center, and enhances system reliability.

The object of the present invention is implemented in accordance with the independent claims.

It can be seen from the technical scheme provided in the invention as described above that the method provided in the present invention has the following advantages:

1. It can implement pre-authorization for batch programs, reduce concurrent traffic of visits to the right center, and enhance system reliability.

2. Since the pre-authorization for batch programs is achieved, it is helpful to reduce the number of requesting the right center to dispatch the preview right, and thereby reduces waiting time for a user and improves user's experience.

3. The configurable preview rules provide a flexible service operation method for the operators, for example, multiple programs with the same preview rule can be sold in package.

4. According to the present invention, it doesn't change the structures of existing devices and is compatible with existing devices.

### Brief Description of the Drawings

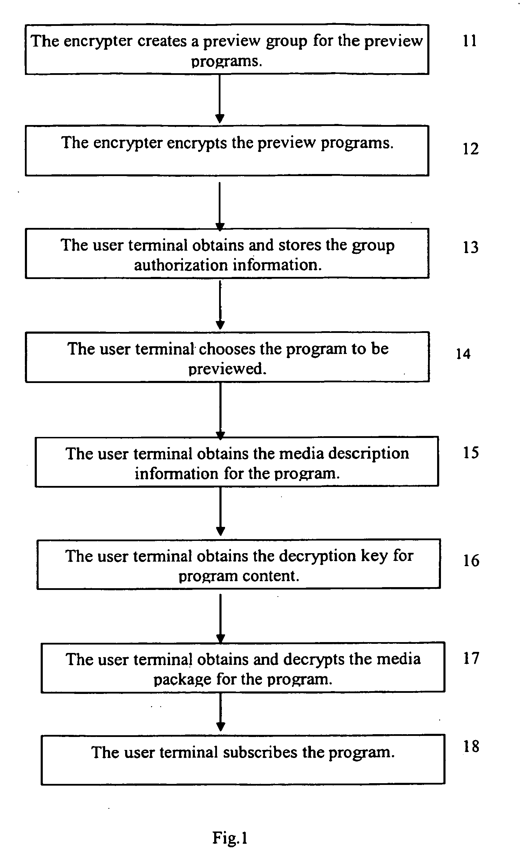

Figure 1 is a flow diagram for implementing preview of IPTV programs according to an embodiment of the invention.

### Detailed Description of the Embodiments

The major technical scheme of the invention is as follows: one or more preview groups are configured in a Digital Right Management (DRM) system, each preview group corresponding to one or more programs permitted to be previewed. Group authorization information is generated for a terminal according to a preview group and is dispatched to the terminal. The terminal obtains a Content Encrypt Key (CEK) or a seed of the CEK for a preview program chosen from a corresponding preview group by the terminal and decrypts the preview program chosen by the terminal, so as to implement program preview.

A prerequisite for implementing the technical scheme of the present invention is that the CEK or the CEK generation seed for a preview program is constant, i.e., in the entire program playing process, a terminal obtains a CEK with an algorithm by using a random but constant value.

In order to make the present invention understood better, the method provided in the invention will be described in detail, with reference to the accompanying drawings.

An embodiment of the method provided in the present invention is shown in Figure 1, including the following steps:

Step 11: In a DRM system, an encrypt machine creates multiple preview groups for the preview programs according to different preview rules, and assigns a Group ID, a Group Encrypt Key (GEK) or a GEK obtaining ways, and a preview rule to each preview group.

After the encrypt machine has created the preview groups, it notifies the right center of information, such as the Group ID, the GEK or GEK obtaining ways, the preview rule, etc. corresponding to each preview group. The right center stores the above information.

The preview rule is a restriction on watching a preview program by a terminal, and preview programs can be divided according to the restrictions of accumulated time of preview which is permitted, permitted number of previews or the validity period, etc. In this way, each preview program can be assigned to a corresponding preview group according to its preview rule, and each preview group includes one or more preview programs with the same preview rule.

Step 12: When preview is permitted for a program; the program is encrypted.

In the present invention, two-level encryption processing is required in the program, that is, the program content is encrypted, and then the CEK or the CEK generation seed for the program is encrypted. The two encryption processes can be done in succession or separately.

The content encryption process for a program to be previewed is: a CEK or a CEK generation seed and a signature key for the program are determined, and the media packet of the program is encrypted with the CEK in accordance with a symmetric cryptographic algorithm. Since the symmetric cryptographic algorithm is used, the decryption key for the program is the CEK or the CEK generation seed for the program, and the decryption algorithm is the corresponding encryption algorithm.

The information of the encrypted CEK or the CEK generation seed and the signature key for the preview program is carried in the ISMACrypKey which is in the media description information for the program (for SDP protocol, the SDP file is taken).

The encryption process that the information of encrypted CEK or the CEK generation seed and the signature key for the preview program is carried in ISMACrypKey in the program description information is hereinafter described in detail.

First, the encrypt machine determines the CEK or the CEK generation seed and the signature key for the preview program. Next, the encrypt machine chooses a corresponding preview group from the existing preview groups according to the preview rule of the program, and obtains the Group ID and GEK of the preview group. Finally, the encrypt machine defines parameters of Group ID and Content Key in ISMACrypKey which is in the media description information of the group. The value of the parameter Group ID is a Group ID of a preview group corresponding to the program; the content of the parameter Content Key is an encrypted and encoded value of the CEK or the CEK generation seed and the signature key for the program, for example, the CEK or the CEK generation seed and the signature key for the program is concatenated first; then, the concatenated content is encrypted with the GEK of the preview group by using a symmetric cryptographic algorithm; next the encrypted value is encoded and the encoded value is loaded into the parameter Content Key.

Since a symmetric cryptographic algorithm is used, the decryption key of the CEK or the CEK generation seed and the signature key for the program is the Group Encrypt Key (GEK) for the corresponding preview group, and the decryption algorithm is the corresponding encryption algorithm.

For example, the format of ISMACrypKey can be as follows:
ISMACrypKey=(URL)http://10.164.22.58:6080/ri/servletcontentissuer?ContentID=019 ba4422a285ebd;&GroupID=001;&ContentKey=:base64:YXVkcwAAEACAAACqADibcfgS erik7TpMjwF 1hnXW5IcAAAAAAACBn

The Unique Resource Link (URL) in ISMACrypKey refers to an address to which the subscription request is sent after a user confirms to subscribe to a program.

In addition, when an encrypt machine encrypts the program content, an additional segment is generated for a media packet of the program, and a current stage identification for the program and control information are configured in the additional segment according to the preview rule. At the same time, a digest is calculated for the additional segment and the digest is signed with the signature key, the signature being carried in the additional segment. The stage identification includes: an identification for a program-previewable stage and an identification for a program-non-previewable stage.

In that way, the DRM system can control the terminal's decryption for the preview program content according to the stage identification. That is to say, if the stage identification is an identification for a program-previewable stage, the terminal is permitted to decrypt the preview program content; if the stage identification is an identification for a program-non-previewable stage, the terminal is not permitted to decrypt the preview program content.

The control information is a restriction condition for decrypting a packet by a terminal, for example, an adult classification restriction, or a password is required for restricted content, etc. When a terminal meets the restriction condition of the control information, the terminal is permitted to decrypt the preview program content, otherwise the terminal is not permitted to decrypt the preview program content.

Step 13: The terminal obtains the group authorization information and stores the group authorization information.

After the terminal finishes registration with the right center, it requests, in accordance with the Electronic Program Guide (EPG) notification and the locally stored group authorization information, the right center to dispatch the group authorization information of the preview group.

According to the terminal's request, the information corresponding to the related preview group stored by the right center, and the terminal information, the right center generates the corresponding group authorization information and dispatches the group authorization information to the terminal. The terminal receives and stores the group authorization information dispatched from the right center.

The group authorization information includes: a Group ID of the corresponding preview group, a decryption key (i.e., Group Encrypt Key (GEK)) and decryption algorithm information (i.e., the corresponding encryption algorithm) for the CEK or the CEK generation seed of the program in the preview group, a preview rule, and information of the terminal that requests for the group authorization information. The decryption algorithm information is, for example, the decryption algorithm identification.

The purpose of including the terminal information in the group authorization information is: only a terminal with the specific terminal information can decrypt a preview program with the group authorization information, so as to prevent adverse effect on the operator resulted from interception of the group authorization information.

When a terminal obtains the group authorization information, it obtains the entitlement for previewing all programs in the preview group corresponding to the group authorization information. Therefore, when the terminal chooses a preview program from the preview group corresponding to the group authorization information later, the dispatching of the corresponding group authorization information needs not to be performed again. In this way, not only concurrent traffic of visits to the right center is reduced and the system reliability is enhanced, but also the number of requesting the right center to dispatch the preview right by a terminal is reduced, and thereby the waiting time is shortened for the users. Furthermore, the operator can sell multiple programs with the same preview rule in a package.

Step 14: The terminal chooses a preview program.

The terminal obtains a list of programs from the EPG, the list containing the information of the programs' URLs, the right center's URL, and/or the previewable identification, etc. When the program list contains a previewable identification, it indicates the program can be previewed.

When the terminal chooses a program from the list of programs, if the terminal has not subscribed to the program and the program is previewable, prompt of preview or subscription will appear on the interface. When the terminal chooses the preview option, the process goes to step 15.

Step 15: The terminal obtains the media description information of the preview program from the MDN.

Step 16: The terminal utilizes the media description information to obtain the decryption key for the preview program.

According to the value of parameter Group ID in ISMACrypKey which is in the obtained media description information of the program, the terminal searches for the stored group authorization information. If the group authorization information corresponding to the preview program exists, the terminal obtains the decryption key and decryption algorithm identification information for parameter Content Key in ISMACrypKey, the decryption key being a GEK for the preview group corresponding to the preview program, and the decryption algorithm being the corresponding encryption algorithm, then, the terminal decrypts the parameter Content Key according to the GEK and the decryption algorithm information, to obtain the CEK or the CEK generation seed for the preview program, i.e., the decryption key and signature key for the program content. If the group authorization information corresponding to the preview program does not exist, the terminal requests the right center to dispatch the corresponding group authorization information according to the parameter Group ID in ISMACrypKey which is in the description information of the program. According to the terminal's request, the right center generates the corresponding group authorization information and dispatches the group authorization information to the terminal. The terminal stores the received group authorization information and obtains the decryption key GEK and decryption algorithm information for parameter Content Key. The terminal decrypts the parameter Content Key according to the GEK and the decryption algorithm information, to obtain the information of the CEK or the CEK generation seed for the preview program, i.e., the decryption key and signature key for the program content.

Step 17: The terminal establishes a connection to a media server, receives the media packet of the program, and performs authentication, signature and decryption.

First, the terminal performs integrity verification for the stage identification and the control information in the additional segment according to the signature key. After the integrity verification is passed, if the stage identification in the additional segment in the media packet received by the terminal is an identification for a program-previewable stage for the program and the terminal satisfies the control information in the additional segment, the DRM Agent in the terminal decrypts the media packet by using the obtained CEK or the CEK generation seed for the program and plays the program with a media player, so as to implement program preview.

Step 18: The terminal subscribes to the preview program.

If the stage identification in the additional segment in the media packet received by the terminal is an identification for a program-non-previewable stage for the program or the terminal does not satisfy the control information in the additional segment, the DRM Agent searches the terminal to determine whether there is a program right in the terminal, according to the Content ID in ISMACrypKey which is in the media description information of the program. If there is no program right in the terminal, the media player stops dispatching the media packet temporally and enquires whether to subscribe. If choosing to subscribe, the terminal initiates a subscription request to the right center according to the URL in ISMACrypKey which is in the media description information of the program. After obtaining the program right, the terminal obtains a CEK and a right rule of the program from the right and establishes a decryption environment. The media player continues to dispatch the media packet and the DRM Agent also continues to receive the encrypted media packet. After that, the media packet is decrypted according to the CEK or the CEK generation seed for the program and the program is played normally.

If the terminal chooses not to subscribe to the program, the reception of the media packet is stopped.

Another embodiment of the present invention is: An encrypt machine loads the information of encrypted the CEK or the CEK generation seed for a preview program to the additional segment of a media packet for the program (it is RTP packet, if RTP protocol is taken) and dispatches the encrypted information to the terminal. In this way, each packet only has one key, so that the system reliability is enhanced. The terminal obtains a decryption key for the program content from each encrypted media packet to decrypt the media packet.

To sum up, with the method described in the present invention, batch programs may be pre-authorized. Therefore, not only the concurrent traffic of visits to the right center is reduced and system reliability is enhanced, but also the number of requesting the right center to dispatch preview right is reduced, thereby the waiting time for the users is reduced and the users' experience is improved. Furthermore, configurable preview rules provide a flexible service operation means to the operator.

An encryption apparatus for implementing preview of IPTV programs provided in the present invention includes: a storage module and an encryption module. The right center provided in the present invention is equipped with a group authorization device.

The storage module is mainly configured to store preview groups, each preview group corresponding to at least one preview program. The preview programs can be divided into multiple preview groups according to the preview rules. Each preview group has a Group ID and each Group ID identifies a preview group uniquely. Each preview group has a group encrypt key (GEK) or GEK obtaining ways. The storage module is provided to submit the preview group information to the group authorization device.

The encryption module is mainly configured to dispatch an encrypted preview program to the terminal, i.e., the encryption module determines the CEK or the CEK generation seed and the signature key for a preview program to be dispatched and encrypts the media packet of the program by using the CEK and a symmetric cryptographic algorithm. Since a symmetric cryptographic algorithm is used, the decryption key for the program content is the CEK or the CEK generation seed for that program, and the decryption algorithm is the corresponding encryption algorithm. When encrypting the preview program content, the encryption module generates an additional segment for the media packet of the program, and sets a current stage identification for the preview program and control information of the additional segment according to the preview rule of the preview program. Then the encryption module calculates a digest for the additional segment and signs the digest with the signature key, the signature being added to the additional segment. The stage identification includes an identification for a program-previewable stage and an identification for a program-non-previewable stage, the control information is a restriction condition on decrypting a media packet by the terminal. The encryption module encrypts a preview program through the process described in above method.

In addition, the encryption module also encrypts the CEK or the CEK generation seed and the signature key for the preview program. The encrypted information may be carried in ISMACrypKey in the media description information (it is SDP file, if SDP protocol is taken) of the program.

The group authorization device is mainly configured to generate group authorization information for terminals according to the preview group information submitted by a storage module after receiving the group authorization request from the user terminals. The group authorization information includes: a Group ID of the preview group, a preview rule, a decryption key or decryption key obtaining ways for the CEK or the CEK generation seed of the preview program, and decryption algorithm identification information, etc. When a symmetric cryptographic algorithm is used, the decryption key for the CEK or the CEK generation seed of the preview program is the GEK. The group authorization device dispatches the generated group authorization information to the terminals.

A user terminal device provided in the present invention has a key management module, a key obtaining module, and a decryption module.

The key management module is mainly configured to request the group authorization information from the right center. When a terminal finishes a registration with the right center, the key management module requests the right center to dispatch the group authorization information of the preview group that has not been stored by the terminal, according to the Electronic Program Guide (EPG) notification and receives, and stores the group authorization information dispatched from the right center.

When the terminal chooses a program from the list of programs, if the terminal has not subscribed to the program and the program is previewable, preview or subscription is prompted on the interface by the user terminal device. When the user terminal device chooses to preview, the user terminal device obtains the media description information of the preview program from the MDN. In accordance with the value of parameter Group ID in ISMACrypKey which is in the obtained media description information of the program, the key obtaining module requests the key management module to search for the stored group authorization information. If the key management module has stored the group authorization information corresponding to the preview program, the key obtaining module obtains the decryption key GEK and the decryption algorithm identification information for the parameter of Content Key in ISMACrypKey, the decryption key being the GEK for the preview group corresponding to the preview program, and the decryption algorithm being the corresponding encryption algorithm. The key obtaining module decrypts the parameter of Content Key according to the GEK and the decryption algorithm information, to obtain the CEK or the CEK generation seed and the signature key of the preview program. The key obtaining module sends the decryption key for decrypting the content and the signature key to the decryption module.

If the key management module does not store the group authorization information corresponding to the preview program, the key management module requests the right center to dispatch the corresponding group authorization information. After receiving the group authorization information from the right center, the key management module stores the group authorization information and notifies the key obtaining module. After receiving the notification from the key management module, the key obtaining module obtains the CEK or the CEK generation seed and the signature key for the preview program through the fore-mentioned process, and sends the decryption key for decrypting the content and the signature key to the decryption module.

Upon receiving the decryption key and signature key, the decryption module performs signature verification for the additional segment in the media packet by using the signature key first. After the signature verification is passed, the decryption module obtains a current stage identification of the preview program and control information of additional segment from the additional segment in the media packet. After it is determined that the stage identification is an identification for a program-previewable stage for the preview program and the terminal satisfies the control information in the additional segment, the decryption module decrypts the preview program according to the received decryption key, so as to implement program preview. When it is determined that the stage identification is an identification for a program-non-previewable stage for the preview program or the terminal does not meet the restriction condition of the control information in the additional segment, the decryption module searches for the terminal to determine whether there is a program right in the terminal according to the Content ID in ISMACrypKey which is in the media description information of the corresponding program. If there is no program right in the terminal, the dispatching of the media packets is stopped temporally and whether to subscribe is enquired. If choosing to subscribe to the program, the user terminal device initiates a subscription request to the right center according to the URL in ISMACrypKey in the media description information of the program. After obtaining the program right, the terminal obtains a CEK arid a right rule of the program from the right and establishes a decryption environment. The media player continues to dispatch the media packet and the decryption module also continues to receive the encrypted media packet. After that, the media packet is decrypted according to the CEK or the CEK generation seed for the program and the program is played normally. If the user terminal chooses not to subscribe to the program, the reception of the media packet is stopped.
While the present invention has been illustrated and described with reference to some preferred embodiments, the present invention is not limited to these. Those skilled in the art should recognize that various variations and modifications can be made without departing from the scope of the present invention as defined by the accompanying claims.

## Claims

1. A method for implementing preview of IPTV programs, **characterized by** comprising:
configuring (11) at least one preview group in a Digital Right Management, DRM, system, each preview group comprising a plurality of preview programs, each preview program comprising a program-previewable stage permitted to be previewed and a program-non-previewable stage not permitted to be previewed, wherein the preview program comprises multiple media packets;
generating, by the DRM system, group authorization information, comprising a Group ID of the preview group, a preview rule, a Group Encrypt Key, GEK, for Content Encrypt Keys, CEK, or the CEK generation seeds of the plurality of preview programs or decryption key obtaining methods, decryption algorithm information and information of a terminal requesting the group authorization information, for the terminal according to the preview group, and dispatching the group authorization information to the terminal so that the terminal obtains a Content Encrypt Key, CEK, or a CEK generation seed for a preview program chosen from the plurality of preview programs by the terminal in the corresponding preview group according to the received group authorization information;
obtaining and storing (13), by the terminal, the group authorization information;
encrypting (12), by the DRM system, digital content of the preview program, and encrypting the CEK or the CEK generation seed for the preview program and generating an additional segment in addition to the encrypted digital content in each of the multiple media packets of the preview program, the additional segment comprising the encrypted CEK or CEK generation seed for the preview program, a stage identification indicating if the media packet is part of the program-previewable stage of the preview program, and a control information, which is a restriction condition to confine the terminal to decrypt the media packet if the terminal meets predefined restriction criteria according to a preview rule, and dispatching the encrypted information to the terminal;
using said group authorization information, obtaining (16) by the terminal, the decryption key for the chosen program content from each encrypted media packet to decrypt the media packet; and
decrypting (17), by the terminal, the digital content of the preview program in the media packet according to the CEK or the CEK generation seed to implement program preview if the stage identification indicates that the preview program is in the previewable stage and the terminal satisfies the control information, wherein the preview program chosen by the terminal, and, the stage identification and the control information are obtained from the additional segment in the received media packet, and, the CEK or the CEK generation seed is obtained according to the group authorization information, and if the stage identification in the additional segment of the media packet received by the terminal indicates that the preview program is in a program-non-previewable stage or the terminal does not satisfy the control information in the additional segment, a DRM Agent of the terminal searches the terminal to determine whether there is a program right in the terminal, and if there is no program right in the terminal, a media player stops dispatching the media packet temporally and enquires whether to subscribe.

2. The method according to claim 1, wherein the step of encrypting the digital content of the preview program comprises:
determining a CEK or a CEK generation seed and a signature key for the preview program;
encrypting the media packet of the preview program with the CEK in accordance with a symmetric cryptographic algorithm.

3. The method according to claim 1, wherein the process of generating group authorization information for a terminal according to the preview group, and dispatching the group authorization information to the terminal comprising:
finishing, by the terminal, a registration with a right center;
requesting, by the terminal, the right center to dispatch the group authorization information of the preview group that has not been stored locally, according to an Electronic Program Guide (EPG) notification; and
generating, by the right center, the corresponding group authorization information, and dispatching it to the terminal.

4. The method according to claim 1, wherein the step of generating group authorization information for a terminal according to the preview group, and dispatching the group authorization information to the terminal comprises:
after the terminal chooses a preview program and it has not stored the group authorization information of the preview group which the program belongs to, requesting, by the terminal, the right center to dispatch the corresponding group authorization information, according to a Group ID of the preview group carried in the media description information of the preview program; generating, by the right center, the corresponding group authorization information, and dispatching it to the terminal.

5. An IPTV system, comprising a Digital Right Management, DRM, system having an encryption apparatus and a terminal, wherein the IPTV system is configured to implement the method for implementing preview of IPTV programs according to any one of the claims 1 to 4.

## Patentansprüche

1. Verfahren zum Implementieren einer Vorschau von IPTV-Programmen, **gekennzeichnet durch** die folgenden Schritte:
Konfigurieren (11) mindestens einer Vorschaugruppe in einem System des Digital Right Management DRM, wobei jede Vorschaugruppe mehrere Vorschauprogramme umfasst und jedes Vorschauprogramm eine Programm-vorschaubar-Phase, die vorgeschaut werden darf, und eine Programm-nicht-vorschaubar-Phase, die nicht vorgeschaut werden darf, umfasst, wobei das Vorschauprogramm mehrere Medienpakete umfasst;
Erzeugen von Gruppenautorisierungsinformationen **durch** das DRM-System, umfassend eine Gruppen-ID der Vorschaugruppe, eine Vorschauregel, einen Group Encrypt Key GEK für Content Encrypt Keys CEK oder die CEK-Generierungs-Seeds der mehreren Vorschauprogramme oder Entschlüsselungsschlüssel-Erhaltungsverfahren, Entschlüsselungsalgorithmusinformationen und Informationen eines die Gruppenautorisierungsinformationen anfordernden Endgeräts für das Endgerät gemäß der Vorschaugruppe und Aussenden der Gruppenautorisierungsinformationen zu dem Endgerät dergestalt, dass das Endgerät einen Content Encrypt Key CEK oder ein CEK-Generierungs-Seed für ein Vorschauprogramm erhält, das durch das Endgerät in der entsprechenden Vorschaugruppe aus den mehreren Vorschauprogrammen ausgewählt wird, gemäß den empfangenen Gruppenautorisierungsinformationen;
Erhalten und Speichern (13) der Gruppenautorisierungsinformationen **durch** das Endgerät;
Verschlüsseln (12) von digitalem Inhalt des Vorschauprogramms **durch** das DRM-System und Verschlüsseln des CEK oder des CEK-Generierungs-Seed für das Vorschauprogramm und Erzeugen eines zusätzlichen Segments zusätzlich zu dem verschlüsselten digitalen Inhalt in jedem der mehreren Medienpakete des Vorschauprogramms, wobei das zusätzliche Segment Folgendes umfasst: den verschlüsselten CEK oder das CEK-Generierungs-Seed für das Vorschauprogramm, eine Phasenidentifikation, die angibt, ob das Medienpaket Teil der Programm-vorschaubar-Phase des Vorschauprogramms ist, und Steuerinformationen, die eine Beschränkungsbedingung sind, um das Endgerät darauf einzugrenzen, das Medienpaket zu entschlüsseln, wenn das Endgerät vordefinierte Beschränkungskriterien gemäß einer Vorschauregel verfüllt, und Aussenden der verschlüsselten Informationen zu dem Endgerät;
Erhalten (16) des Entschlüsselungsschlüssels für den gewählten Programminhalt aus jedem verschlüsselten Medienpaket **durch** das Endgerät unter Verwendung der Gruppenautorisierungsinformationen, um das Medienpaket zu entschlüsseln; und
Entschlüsseln (17) des digitalen Inhalts des Vorschauprogramms in dem Medienpaket **durch** das Endgerät gemäß dem CEK oder dem CEK-Generierungs-Seed, um Programmvorschau zu implementieren, wenn die Phasenidentifikation angibt, dass sich das Vorschauprogramm in der Vorschaubar-Phase befindet und das Endgerät die Steuerinformationen erfüllt, wobei das **durch** das Endgerät gewählte Vorschauprogramm und die Phasenidentifikation und die Steuerinformationen aus dem zusätzlichen Segment in dem empfangenen Medienpaket erhalten werden und der CEK oder das CEK-Generierungs-Seed gemäß den Gruppenautorisierungsinformationen erhalten wird, und wenn die Phasenidentifikation in dem zusätzlichen Segment des **durch** das Endgerät empfangenen Medienpakets angibt, dass sich das Vorschauprogramm in einer Programm-nicht-vorschaubar-Phase befindet oder das Endgerät die Steuerinformationen in dem zusätzlichen Segment nicht erfüllt, durchsucht ein DRM-Agent des Endgeräts das Endgerät, um zu bestimmen, ob ein Programmrecht in dem Endgerät vorliegt, und wenn kein Programmrecht in dem Endgerät vorliegt, stoppt ein Medien-Player das Aussenden des Medienpakets vorübergehend und fragt, ob subskribiert werden soll.

2. Verfahren nach Anspruch 1, wobei der Schritt des Verschlüsselns des digitalen Inhalts des Vorschauprogramms Folgendes umfasst:
Bestimmen eines CEK oder eines CEK-Generierungs-Seed und eines Signaturschlüssels für das Vorschauprogramm;
Verschlüsseln des Medienpakets des Vorschauprogramms mit dem CEK gemäß einem symmetrischen kryptographischen Algorithmus.

3. Verfahren nach Anspruch 1, wobei der Prozess des Erzeugens von Gruppenautorisierungsinformationen für ein Endgerät gemäß der Vorschaugruppe und des Aussendens der Gruppenautorisierungsinformationen zu dem Endgerät Folgendes umfasst:
das Endgerät beendet eine Registrierung bei einem Rechte-Center;
das Endgerät fordert bei dem Rechte-Center an, die Gruppenautorisierungsinformationen der Vorschaugruppe, die nicht lokal gespeichert wurden, gemäß einer Benachrichtigung des Electronic Program Guide (EPG) auszusenden; und
das Rechte-Center erzeugt die entsprechenden Gruppenautorisierungsinformationen und sendet sie zu dem Endgerät aus.

4. Verfahren nach Anspruch 1, wobei der Schritt des Erzeugens von Gruppenautorisierungsinformationen für ein Endgerät gemäß der Vorschaugruppe und des Aussendens der Gruppenautorisierungsinformationen zu dem Endgerät Folgendes umfasst:
nachdem das Endgerät ein Vorschauprogramm wählt und es die Gruppenautorisierungsinformationen der Vorschaugruppe, zu der das Programm gehört, nicht gespeichert hat, fordert das Endgerät bei dem Rechte-Center an, die entsprechenden Gruppenautorisierungsinformationen gemäß einer Gruppen-ID der Vorschaugruppe, die in den Medienbeschreibungsinformationen des Vorschauprogramms geführt wird, auszusenden; das Rechte-Center erzeugt die entsprechenden Gruppenautorisierungsinformationen und sendet sie zu dem Endgerät aus.

5. IPTV-System, das ein System des Digital Right Management DRM umfasst, das eine Verschlüsselungsvorrichtung und ein Endgerät aufweist, wobei das IPTV-System dafür ausgelegt ist, das Verfahren zum Implementieren einer Vorschau von IPTV-Programmen nach einem der Ansprüche 1 bis 4 zu implementieren.

## Revendications

1. Procédé d'implémentation d'une prévisualisation de programmes IPTV, **caractérisé en ce qu'**il comprend :
la configuration (11) d'au moins un groupe de prévisualisation dans un système de Gestion de Droits Numériques, DRM, chaque groupe de prévisualisation comprenant une pluralité de programmes de prévisualisation, chaque programme de prévisualisation comprenant un stade de programme prévisualisable pouvant être prévisualisé et un stade de programme non prévisualisable ne pouvant pas être prévisualisé, dans lequel le programme de prévisualisation comprend de multiples paquets multimédia ;
la génération, par le système DRM, d'informations d'autorisation de groupe, comprenant une ID de Groupe du groupe de prévisualisation, une règle de prévisualisation, une Clé de Cryptage de Groupe, GEK, de Clés de Cryptage de Contenu, CEK, ou les germes de génération de CEK de la pluralité de programmes de prévisualisation ou de procédés d'obtention de clés de décryptage, des informations d'algorithme de décryptage et des informations d'un terminal demandant les informations d'autorisation de groupe, pour le terminal en fonction du groupe de prévisualisation, et l'envoi des informations d'autorisation de groupe au terminal de telle sorte que le terminal obtienne une Clé de Cryptage de Contenu, CEK, ou un germe de génération de CEK pour un programme de prévisualisation choisi dans la pluralité de programmes de prévisualisation par le terminal dans le groupe de prévisualisation correspondant en fonction des informations d'autorisation de groupe reçues ;
l'obtention et le stockage (13), par le terminal, des informations d'autorisation de groupe ;
le cryptage (12), par le système DRM, du contenu numérique du programme de prévisualisation, et le cryptage de la CEK ou du germe de génération de CEK du programme de prévisualisation et la génération d'un segment supplémentaire en plus du contenu numérique crypté dans chacun des multiples paquets multimédia du programme de prévisualisation, le segment supplémentaire comprenant la CEK cryptée ou le germe de génération de CEK crypté du programme de prévisualisation, une identification de stade indiquant si le paquet multimédia fait partie du stade de programme prévisualisable du programme de prévisualisation, et une information de commande, laquelle est une condition de restriction pour limiter le terminal au décryptage du paquet multimédia si le terminal satisfait à des critères de restriction prédéfinis en fonction d'une règle de prévisualisation, et l'envoi des informations cryptées au terminal ;
au moyen des informations d'autorisation de groupe, l'obtention (16) par le terminal, de la clé de décryptage du contenu de programme choisi de chaque paquet multimédia crypté pour décrypter le paquet multimédia ; et
le décryptage (17), par le terminal, du contenu numérique du programme de prévisualisation dans le paquet multimédia en fonction de la CEK ou du germe de génération de CEK pour implémenter une prévisualisation de programme si l'identification de stade indique que le programme de prévisualisation se trouve au stade prévisualisable et que le terminal satisfait à l'information de commande, le programme de prévisualisation étant choisi par le terminal, et l'identification de stade et l'information de commande étant obtenues à partir du segment supplémentaire dans le paquet multimédia reçu, et la CEK ou le germe de génération de CEK étant obtenu(e) en fonction des informations d'autorisation de groupe, et si l'identification de stade dans le segment supplémentaire du paquet multimédia reçu par le terminal indique que le programme de prévisualisation se trouve à un stade de programme non prévisualisable ou si le terminal ne satisfait pas à l'information de commande dans le segment supplémentaire, un Agent DRM du terminal explore le terminal pour déterminer s'il existe un droit au programme dans le terminal, et s'il n'existe pas de droit au programme dans le terminal, un lecteur multimédia arrête l'envoi du paquet multimédia temporellement et demande s'il convient de souscrire ou non.

2. Procédé selon la revendication 1, dans lequel l'étape de cryptage du contenu numérique du programme de prévisualisation comprend :
la détermination d'une CEK ou d'un germe de génération de CEK et d'une clé de signature du programme de prévisualisation ;
le cryptage du paquet multimédia du programme de prévisualisation avec la CEK conformément à un algorithme cryptographique symétrique.

3. Procédé selon la revendication 1, dans lequel le processus de génération d'informations d'autorisation de groupe pour un terminal en fonction du groupe de prévisualisation, et d'envoi des informations d'autorisation de groupe au terminal comprend :
L'achèvement, par le terminal, d'un enregistrement auprès d'un centre de droits ;
la demande, par le terminal, au centre de droits d'envoyer les informations d'autorisation de groupe du groupe de prévisualisation qui n'ont pas été stockées localement, en fonction d'une notification de Guide de Programmes Electronique (EPG) ; et
la génération, par le centre de droits, des informations d'autorisation de groupe correspondantes, et l'envoi de celles-ci au terminal.

4. Procédé selon la revendication 1, dans lequel l'étape de génération d'informations d'autorisation de groupe pour un terminal en fonction du groupe de prévisualisation, et l'envoi des informations d'autorisation de groupe au terminal comprend :
après que le terminal a choisi un programme de prévisualisation et n'a pas stocké les informations d'autorisation de groupe du groupe de prévisualisation auquel appartient le programme, la demande, par le terminal, au centre de droits d'envoyer les informations d'autorisation de groupe correspondantes, en fonction d'une ID de Groupe du groupe de prévisualisation acheminée dans les informations de description multimédia du programme de prévisualisation ; la génération, par le centre de droits, des informations d'autorisation de groupe correspondantes, et l'envoi de celles-ci au terminal.

5. Système IPTV, comprenant un système de Gestion de Droits Numériques, DRM, ayant un appareil de cryptage et un terminal, le système IPTV étant configuré pour mettre en oeuvre le procédé d'implémentation d'une prévisualisation de programmes IPTV selon l'une quelconque des revendications 1 à 4.
